# EUROPÄISCHE PATENTSCHRIFT

(11) **EP 0 451 821 B1**
(45) Veröffentlichungstag und Bekanntmachung des Hinweises auf die Patenterteilung: **04.01.1995**
(21) Anmeldenummer: 91105700.8
(22) Anmeldetag: 10.04.1991
(51) Int. Cl.: C09K 19/58, C09K 19/54, G02F 1/137

(54) **Ionophore enthaltende ferroelektrische Flüssigkristallmischungen**
Ferroelectric liquid crystal mixtures containing an ionophore
Mélanges liquides cristallins contenant un composé ionophore

(30) Priorität: 12.04.1990 DE 4011792
(43) Veröffentlichungstag der Anmeldung: 16.10.1991
(73) Patentinhaber: HOECHST AKTIENGESELLSCHAFT, 65926 Frankfurt am Main (DE)
(72) Erfinder: Harada, Takamasa, Inbagun, Chiba (JP); Rösch, Norbert, Dr., W-6000 Frankfurt am Main (DE); Wingen, Rainer, Dr., W-6234 Hattersheim am Main (DE)

(56) Entgegenhaltungen:
- EP-A- 0 385 688
- CHEMISCHE BERICHT, Bd. 116, Nr. 5, 1983, Seiten 2028-2034; F.VOEGTLE, T.KLEINER ET AL: "Neutral Ionophores with selectivity for sodium ions"

## Beschreibung

Die Erfindung betrifft den Einsatz von Ionophoren in ferroelektrischen Flüssigkristallmischungen und die Anwendung dieser Mischungen in elektro-optischen Schalt- und -Anzeigeelementen.

Schalt- und Anzeigeelemente mit einem Gehalt an ferroelektrischen Flüssigkristall-Mischungen ("FLC-Lichtventile") sind beispielsweise aus der EP-B 0 032 362 (= US-A 4 367 924) bekannt. Flüssigkristallichtventile sind Vorrichtungen, die z.B. aufgrund elektrischer Beschaltung ihre optischen Transmissionseigenschaften derart ändern, daß durchfallendes (und gegebenenfalls wieder reflektiertes) Licht intensitätsmoduliert wird. Beispiele sind die bekannten Uhren- und Taschenrechneranzeigen oder Flüssigkristalldisplays im OA - (office automation) oder TV- (television) Bereich. Dazu zählen aber auch optische Verschlüsse, sogenannte "light shutter", wie sie z.B. in Kopiermaschinen, Druckern, Schweißbrillen, Polbrillen zur dreidimensionalen Betrachtung etc. eingesetzt werden. Auch sogenannte "spatial light modulators" zählen zum Anwendungsbereich von Flüssigkristallichtventilen (siehe Liquid Crystal Device Handbook, Nikkan Kogyo Shimbun, Tokyo, 1989; ISBN 4-526-02590-9C 3054 und darin zitierte Arbeiten).

Die elektrooptischen Schalt- und Anzeigeelemente sind so aufgebaut, daß die FLC-Schicht beiderseitig von Schichten eingeschlossen ist, die üblicherweise, in dieser Reihenfolge ausgehend von der FLC-Schicht, mindestens eine elektrisch isolierende Schicht, Elektroden und eine Begrenzungsscheibe (z.B. aus Glas) sind. Außerdem enthalten sie einen Polarisator, sofern sie im "guest-host"- oder im reflexiven Modus betrieben werden, oder zwei Polarisatoren, wenn als Modus die transmissive Doppelbrechung ("birefringence mode") genutzt wird.

Orientierungsschichten bringen, gemeinsam mit einem hinreichend klein gewählten Abstand der Begrenzungsscheiben, die FLC-Moleküle der FLC-Mischung in eine Konfiguration, bei der die Moleküle mit ihren Längsachsen parallel zueinander liegen und die smektischen Ebenen senkrecht oder schräg zur Orientierungsschicht angeordnet sind. In dieser Anordnung haben die Moleküle bekanntlich zwei gleichwertige Orientierungen, zwischen denen sie durch pulsartiges Anlegen eines elektrischen Feldes geschaltet werden können, d.h. FLC-Displays sind bistabil schaltbar. Die Schaltzeiten sind umgekehrt proportional zur spontanen Polarisation der FLC-Mischung und liegen im Bereich von µs.

Als Hauptvorteil solcher FLC-Displays gegenüber den in der industriellen Praxis bisher im wesentlichen noch anzutreffenden LC-Displays wird das erreichbare Multiplex-Verhältnis angesehen, d.h. die maximale Zahl der im zeitlichsequentiellen Verfahren ("Multiplex-Verfahren") ansteuerbaren Zeilen, das bei FLC-Displays signifikant größer als bei herkömmlichen LC-Displays ist. Diese elektrische Ansteuerung basiert im wesentlichen auf der vorstehend genannten und in SID 85 DIGEST p. 131 (1985) beispielhaft beschriebenen Pulsadressierung.

Ein wesentlicher Nachteil von FLC-Displays ist jedoch, daß sie im nichtangesteuerten Zustand (meistens) eine unerwünschte Nichtuniformität des Direktors (d.h. der Molekül-Vorzugsrichtung) und somit einen oder mehrere sogenannte Twist-Zustände aufweisen (M.A. Handschy, N.A. Clark, S.T. Lagerwall; Phys: Rev. Lett. 51, 471 (1983) M. Glogarova, J. Pavel; J.Phys. (France) 45, 143 (1984) N. Higi, T. Ouchi, H. Takezoe, A. Fukuda; Jap. J. Appl. Phys. 27, 8 (1988)).
Diese Nichtuniformität führt im Memory-Zustand und im Multiplexbetrieb zu einer starken Kontrastverminderung im Display, insbesondere dadurch, daß der lichtsperrende Zustand eine beträchtliche Aufhellung erfährt (grauer Dunkelzustand). Außerdem ist mit dem Auftreten des Twist-Zustandes eine Wellenlängendispersion verknüpft, die zu verfälschten Farben im Display führen kann.

Es wurde bereits versucht, durch geeignete Wahl von Orientierungsschichten das Auftreten der störenden Twist-Zustände zu unterdrücken, wobei aber bislang nur mäßige Erfolge zu verzeichnen waren. Sehr oft erwiesen sich die manchmal auftretenden nahezu uniformen Zustände (z.B. bei Verwendung von schrägbedampften SiO) als instabil und zerfielen wieder in Twist-Zustände.

Das Auftreten von Twist-Zuständen scheint insbesondere bei der Verwendung von ferroelektrischen Flüssigkristallmischungen mit hoher spontaner Polarisation begünstigt zu sein (M.A. Handschy and N.A. Clark; Ferroelectrics 59, 69 (1984)). Solche Mischungen sind jedoch insbesondere für die Entwicklung hochinformativer Displays besonders geeignet, weil sie zu kurzen Schaltzeiten führen.

Aufgabe der vorliegenden Erfindung ist es, FLC-Mischungen bereitzustellen, die in FLC-Displays keine Twistzustände, sondern uniforme Zustände ausbilden und somit zu einem hohen Kontrast führen.

Überraschenderweise wurde nun gefunden, daß durch Zugabe von speziellen Ionophoren zu FLC-Mischungen das Auftreten der oben beschriebenen Twist-Zustände unterdrückt werden kann.

In DE-A 39 39 697 wurde bereits der Einsatz von Kryptanden und Coronanden in Flüssigkristallmischungen zur Unterdrückung von sogenannten Geisterbildern vorgestellt. Die nunmehr eingesetzten Ionophore - Handelsprodukte, z.B. für ionenselektive Elektroden; zur Begriffsbestimmung z.B. O.A. Neumüller (ed.), Römpps Chemie-Lexikon, 8. Auflage, Franck'hsche Verlagshandlung, Stuttgart 1985 - unterdrücken hingegen das Auftreten von Twist-Zuständen unabhängig von der jeweils verwendeten Orientierungsschicht.

Die Lösung der Aufgabe liegt somit in der Bereitstellung einer Flüssigkristallmischung bestehend aus mindestens zwei Komponenten, die als eine Komponente mindestens ein als Ionophor wirkendes Amid der allgemeinen Formel (I) enthält 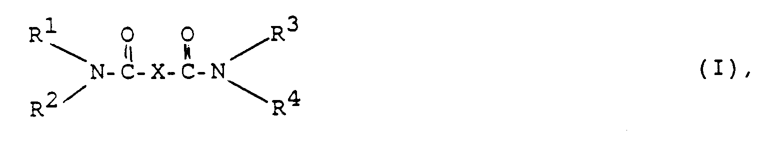
wobei
- R¹,R²,R³,R⁴: unabhängig voneinander Alkyl mit 1 bis 15 C-Atomen, bei dem eine -CH₂-Gruppe durch -COO oder -CO- oder eine nicht direkt an das N-Atom gebundene -CH₂-Gruppe durch -O- ersetzt sein kann,
- X: ein Alkylen mit 2 bis 9 C-Atomen ist, bei dem ein oder zwei nicht benachbarten -CH₂-Gruppen durch -O- ersetzt sein können, bei dem zwei benachbarte CH₂-Gruppen durch 1,2-Phenylen oder 1,2-Cyclohexylen ersetzt sein können, bei dem zwei benachbarte -CH₂-Gruppen durch CH(CH₃)-CH(CH₃)- ersetzt sein können und bei dem ein H-Atom einer CH₂-Gruppe durch R⁵ oder R⁶ substituiert sein kann, wobei
R⁵ Alkyl mit 1 bis 15 C-Atomen
R⁶ Alkyl mit 1 bis 15 C-Atomen oder CH₂-O-CH₂-CO-NR¹R² bedeuten.

Bevorzugt wird eine ferroelektrische Flüssigkristallmischung verwendet, die mindestens ein Amid der Formel (I) enthält, wobei
- R¹,R²,R³,R⁴: unabhängig voneinander Alkyl mit 1 bis 15 C-Atomen, bei dem eine -CH₂-Gruppe durch -COO- oder eine nicht direkt an das N-Atom gebundene -CH₂-Gruppe durch -O- ersetzt sein kann, Cyclohexyl oder Phenyl bedeuten und
- X: ein Alkylen mit 2 bis 9 C-Atomen ist, bei dem ein oder zwei nicht benachbarte -CH₂-Gruppen durch -O- ersetzt sein können, bei dem zwei benachbarte CH₂-Gruppen durch 1,2-Phenylen oder 1,2-Cyclohexylen ersetzt sein können, bei dem zwei benachbarte -CH₂-Gruppen durch -CH(CH₃)-CH(CH₃)- ersetzt sein können und bei dem ein H-Atom einer CH₂-Gruppe durch R⁵ oder R⁶ substituiert sein kann, wobei R⁵, R⁶ unabhängig voneinander Alkyl mit 1 bis 15 C-Atomen bedeuten.

Besonders bevorzugt werden Amide der Formel (I), bei denen
- R¹,R²,R³,R⁴: unabhängig voneinander Alkyl mit 1 bis 15 C-Atomen, bei dem eine -CH₂-Gruppe durch -COO- ersetzt sein kann oder Cyclohexyl bedeuten und
- X: ein Alkylen mit 2 bis 9 C-Atomen ist, bei dem ein oder zwei nicht benachbarte -CH₂-Gruppen durch -O- ersetzt sein können, bei dem zwei benachbarte CH₂-Gruppen durch 1,2-Phenylen ersetzt sein können, und bei dem zwei benachbarte -CH₂-Gruppen durch -CH(CH₃)-CH(CH₃)-
ersetzt sein können.

Ebenfalls besonders bevorzugt werden solche Amide der Formel (I), bei denen -X- für eine der folgenden Gruppen steht 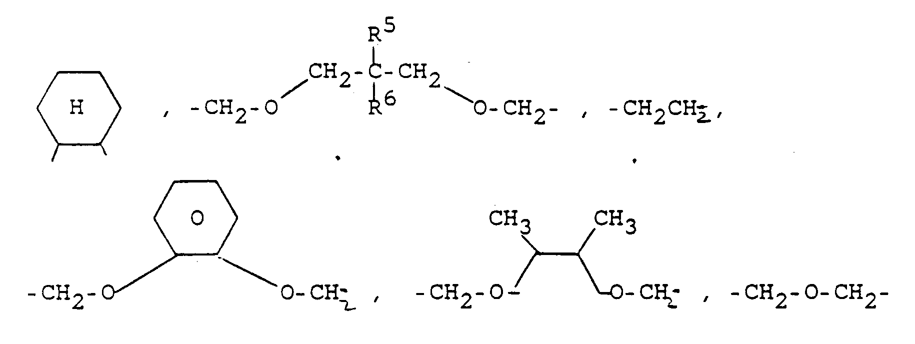
wobei R¹ bis R⁶ die oben genannten Bedeutungen tragen.

Ganz besonders bevorzugt steht -X- für folgende Gruppen

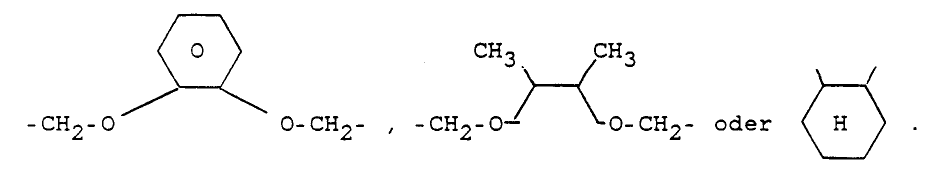

Prinzipiell ist ein weites Spektrum von Ionophoren für die Verwendung in Flüssigkristallmischungen geeignet, jedoch sind zur Unterdrückung von Twist-Zuständen insbesondere Amide der eben beschriebenen Formel (1) geeignet.

Die erfindungsgemäßen FLC-Mischungen enthalten vorzugsweise 0,01 bis 10 Mol-%, insbesondere 0,1 bis 10 Mol-% der Verbindungen der allgemeinen Formel (I).

Die Flüssigkristall-Mischungen bestehen in der Regel aus 2 bis 20, vorzugsweise 2 bis 15 Komponenten, darunter mindestens ein Ionophor (Amid) der Formel (I). Die anderen Bestandteile werden vorzugsweise ausgewählt aus den bekannten Verbindungen mit nematischen, cholesterischen und/oder geneigt/smektischen Phasen, dazu gehören beispielsweise Schiffsche Basen, Biphenyle, Terphenyle, Phenylcyclohexane, Cyclohexylbiphenyle, Pyrimidine, Zimtsäureester, Cholesterinester, verschieden überbrückte, terminal-polare mehrkernige Ester von p-Alkylbenzoesäuen. Im allgemeinen liegen die im Handel erhältlichen Flüssigkristall-Mischungen bereits vor der Zugabe der erfindungsgemäßen Verbindung(en) als Gemische verschiedenster Komponenten vor, von denen mindestens eine mesogen ist, d. h. als Verbindung, in derivatisierter Form oder im Gemisch mit bestimmten Cokomponenten eine Flüssigkristall-Phase zeigt [= mindestens eine enantiotrope (Klärtemperatur > Schmelztemperatur) oder monotrope (Klärtemperatur < Schmelztemperatur) Mesophasenbildung erwarten läßt].

Die beschriebenen Flüssigkristallmischungen lassen sich vorteilhaft in elektrooptischen Schalt- und Anzeigevorrichtungen (FLC-Lichtventile bzw. Displays) einsetzen. Diese weisen u.a. folgende Bestandteile auf: eine erfindungsgemäße flüssigkristalline Mischung (enthaltend einen Ionophor), Trägerplatten (z.B. aus Glas oder Kunststoff), beschichtet mit transparenten Elektroden (zwei Elektroden), mindestens eine Orientierungsschicht, Abstandshalter, Kleberahmen, Polarisatoren sowie für Farbdisplays dünne Farbfilterschichten. Weitere mögliche Komponenten sind Antireflex-, Passivierungs-, Ausgleichs- und Sperrschichten sowie elektrisch nichtlineare Elemente, wie z.B. Dünnschichttransistoren (TFT) und Metall-Isolator- Metall-(MIM)-Elemente. Im Detail ist der allgemeine Aufbau von Flüssigkristalldisplays bereits in einschlägigen Monographien beschrieben (z.B. E. Kaneko, "Liquid Crystal TV Displays: Principles and Applications of Liquid Crystal Displays", KTK Scientific Publishers, 1987, Seiten 12-30 und 163-172).

Unter den FLC-Lichtventilen werden Schaltvorrichtungen, die im Multiplexverfahren angesteuert werden, bevorzugt. Besonders bevorzugt werden Flüssigkristallzellen, die in SSFLC-Technik ("surface stabilized ferroelectric liquid crystal") arbeiten und bei denen die Schichtdicke (d.h. Abstand der Begrenzungsscheiben) 1 bis 20 µm beträgt. Besonders bevorzugt ist eine Schichtdicke von 1 bis 10 µm, im Doppelbrechungsmodus insbesonders von 1,2 bis 3 µm.

Des weiteren lassen sich die erfindungsgemäßen Verbindungen vorteilhaft beim Betrieb eines SSFLC Displays im sog. "guest-host mode" einsetzen, bei dem der optische Effekt nicht auf Doppelbrechungsphänomene zurückgeht, sondern auf die anisotrope Absorption dichroitischer Farbstoffe, die in einer FLC-Matrix gelöst sind.

Die erfindungsgemäßen Verbindungen unterdrücken das Auftreten von Twist-Zuständen für verschiedene Geometrien der smektischen Lagen in der SSFLC-Zelle (siehe z.B. H.R. Dübal, C. Escher, D. Ohlendorf; Proc. 6th Intl. Symp. on Electrets, Oxford, England 1988). Insbesondere gilt dies für die sog. "jungfräuliche (virgin) Textur", bei der die smektischen Lagen gewinkelt verlaufen ("Chevron"-Geometrie) und für die "bookshelf" oder "quasi-bookshelf" Geometrie, bei der die smektischen Lagen senkrecht zu den Glasplatten verlaufen (siehe Y. Sato et al., Jap. J. Appl. Phys. 28, 483 (1989)). Die Verwendung der erfindungsgemäßen Verbindungen in dieser "bookshelf" Geometrie ist besonders vorteilhaft, da dies nicht nur zu guten Dunkelzuständen, sondern wegen des großen effektiven Schaltwinkels auch zu einer hohen Transmission des Hellzustandes führt.

Außerdem hat sich gezeigt, daß die erfindungsgemäßen Verbindungen in FLC-Mischungen die feldinduzierte Herstellung einer homogenen quasi-bookshelf Geometrie (Y. Sato et al., Jap. J. Appl. Phys. 28, 483 (1989)) erleichtern.

Die Erfindung wird durch die nachfolgenden Beispiele erläutert:

### Beispiele

In den folgenden Beispielen werden die erfindungsgemäßen Ionophore in Konzentrationen von 1 Mol-% eingesetzt. Als Beispiele für die erfindungsgemäßen Verbindungen dienen die Verbindungen V1 und V2. 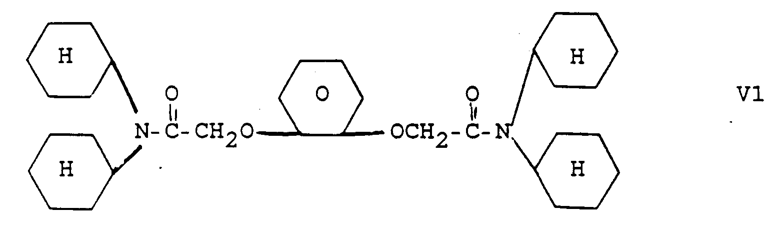
N,N,N',N'-Tetracyclohexyl-1,2-phenylendioxydiacetamid 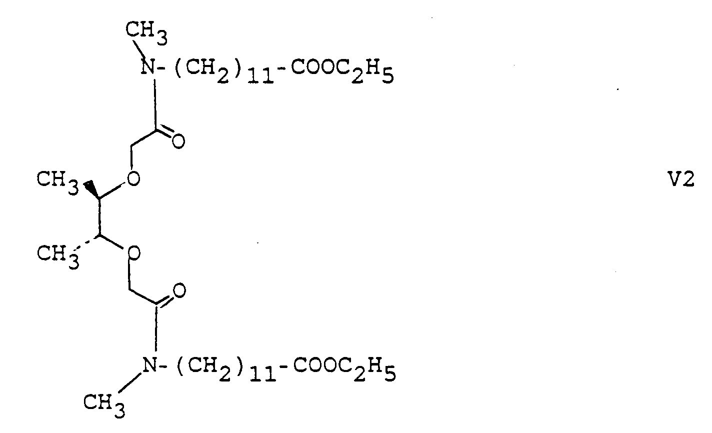
(-)-(R,R)-N,N'-[Bis(11-ethoxycarbonyl)undecyl]-N,N'-4,5-tetramethyl-3,6-dioxa-octandiamid
Es wird eine flüssigkristalline Grundmischung hergestellt, die folgende acht Komponenten enthält (in Mol-%): 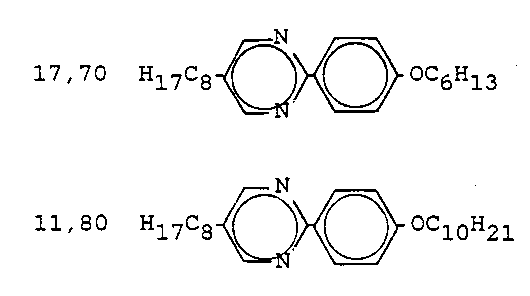 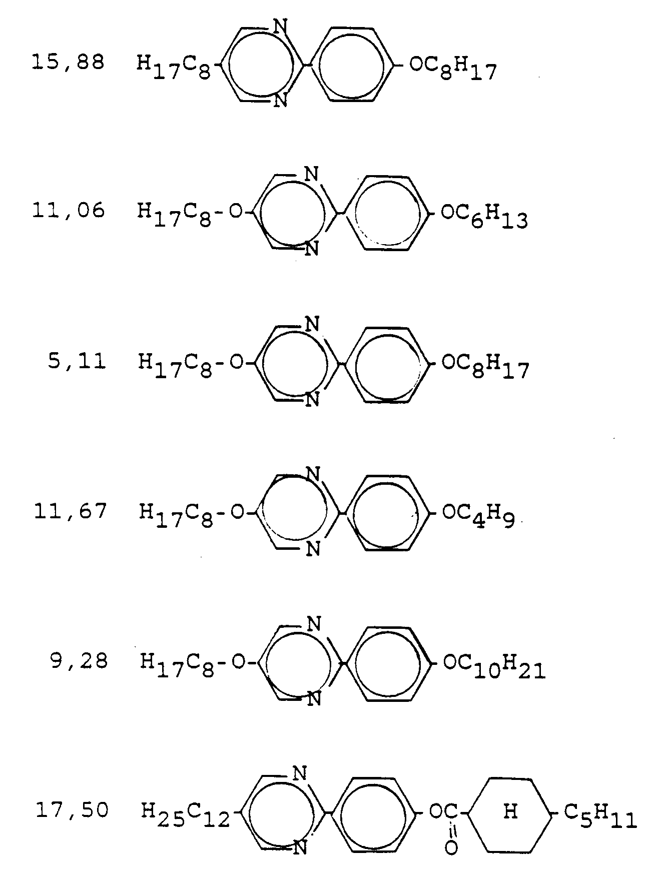
Die Mischung zeigt folgende Phasenfolge:
S_{c} 69 S_{A} 76 N 92 I
Als Beispiele für Dotierstoffe werden folgende Verbindungen eingesetzt:

### Dotierstoff D1

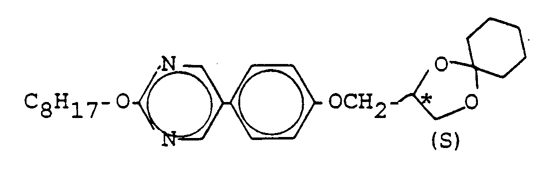

### Dotierstoff D2

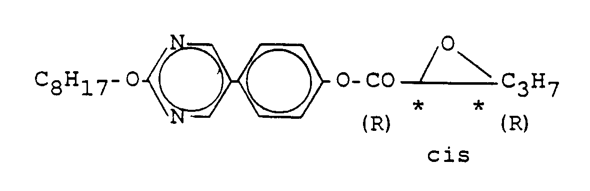

### Dotierstoff D3

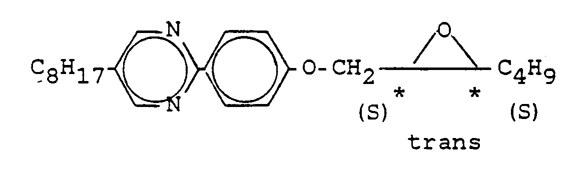

Aus der genannten LC-Mischung, den Dotierstoffen und den Ionophoren V1 bzw. V2 werden die folgenden erfindungsgemäßen FLC-Mischungen erstellt.

### Beispiel 1 (Vergleichsmischungen)

Die FLC-Vergleichsmischung M1 besitzt folgende Zusammensetzung (in Mol-%)

| | |
|---|---|
| LC-Grundmischung | 78,3 % |
| Dotierstoff D1 | 4,7 % |
| Dotierstoff D2 | 9,0 % |
| Dotierstoff D3 | 8,0 % |

und die Phasenfolge S_{c}* 60 S_{A}* 70 N* 79 I mit einer spontanen Polarisation von 55 nC·cm⁻². Der Schaltwinkel (2 ϑ_{eff}), die Transmission des Hell- und Dunkelzustandes und der optische Kontrast werden bestimmt. Dazu befindet sich die Meßzelle mit der FLC-Mischung in einem Polarisationsmikroskop, das mit einem Drehtisch ausgestattet ist. Bei Ansteuerung der Zelle kann der Schaltwinkel durch Drehen des Mikroskoptisches ermittelt werden. Die Transmission von Hell- und Dunkelzustand wird mit Hilfe einer Photodiode gemessen, die im Strahlengang des Polarisationsmikroskops angebracht ist. Der optische Kontrast errechnet sich über das Verhältnis der Transmission von Hell- und Dunkelzustand.

Für die Vergleichsmischung ergeben sich folgende Meßwerte:

| | |
|---|---|
| Schaltwinkel (2 ϑ_{eff}) | 15° |
| Transmission (Dunkelzustand) | 8 % |
| Transmission (Hellzustand) | 28 % |
| Kontrast | 3,5 |

### Beispiel 2

Eine FLC-Mischung, die sich von der vorgenannten nur dadurch unterscheidet, daß sie zusätzlich 1 Mol-% des Ionophors V1 enthält, ergab folgende Meßergebnisse:

| | |
|---|---|
| Schaltwinkel (2 ϑ_{eff}) | 24° |
| Transmission (Dunkelzustand) | 0,7 % |
| Transmission (Hellzustand) | 58 % |
| Kontrast | 82 |

Durch die Zugabe des Ionophors V1 erlangt die FLC-Mischung deutlich bessere Eigenschaften: der Schaltwinkel wird wesentlich größer und der Kontrast stark verbessert.

### Beispiel 3

Eine FLC-Mischung, die sich von der Vergleichsmischung aus Beispiel 1 nur dadurch unterscheidet, daß sie 1 Mol-% des Ionophors V2 enthält, weist folgenden effektiven Schaltwinkel auf:
2 ϑ_{eff} = 21°
Es ergibt sich also durch Zusatz der erfindungsgemäßen Verbindung eine Erhöhung des Schaltwinkels um 40 %.

## Patentansprüche (Patentansprüche für folgende(n) Vertragsstaat(en): AT, BE, CH, DE, DK, FR, GB, GR, IT, LI, LU, NL, SE)

1. Ferroelektrische Flüssigkristallmischung bestehend aus mindestens zwei Komponenten, dadurch gekennzeichnet, daß sie als eine Komponente mindestens einen Ionophor der allgemeinen Formel (I) enthält 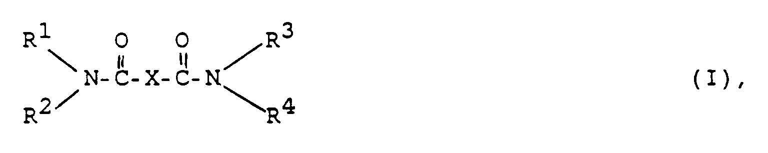 wobei
R¹,R²,R³,R⁴ unabhängig voneinander Alkyl mit 1 bis 15 C-Atomen, bei dem eine -CH₂-Gruppe durch -COO- oder -CO- oder eine nicht direkt an das N-Atom gebundene -CH₂-Gruppe durch -O- ersetzt sein kann, Cyclohexyl, Phenyl oder Benzyl bedeuten und
X ein Alkylen mit 2 bis 9 C-Atomen ist, bei dem ein oder zwei nicht benachbarte -CH₂-Gruppen durch -O- ersetzt sein können, bei dem zwei benachbarte CH₂-Gruppen durch 1,2-Phenylen oder 1,2-Cyclohexylen ersetzt sein können, bei dem zwei benachbarte -CH₂-Gruppen durch -CH(CH₃)-CH(CH₃)- ersetzt sein können und bei dem ein H-Atom einer CH₂-Gruppe durch R⁵ oder R⁶ substituiert sein kann, wobei R⁵ Alkyl mit 1 bis 15 C-Atomen R⁶ Alkyl mit 1 bis 15 C-Atomen oder CH₂-O-CH₂-CO-NR¹R² bedeuten.

2. Ferroelektrische Flüssigkristallmischung gemäß Anspruch 1, dadurch gekennzeichnet, daß sie mindestens einen Ionophor der Formel (I) enthält, wobei
R¹,R²,R³,R⁴ unabhängig voneinander Alkyl mit 1 bis 15 C-Atomen, bei dem eine -CH₂-Gruppe durch -COO- oder eine nicht direkt an das N-Atom gebundene -CH₂-Gruppe durch -O- ersetzt sein kann, Cyclohexyl oder Phenyl bedeuten und
X ein Alkylen mit 2 bis 9 C-Atomen ist, bei dem ein oder zwei nicht benachbarte -CH₂-Gruppen durch -O- ersetzt sein können, bei dem zwei benachbarte CH₂-Gruppen durch 1,2-Phenylen oder 1,2-Cyclohexylen ersetzt sein können, bei dem zwei benachbarte -CH₂-Gruppen durch -CH(CH₃)-CH(CH₃)- ersetzt sein können und bei dem ein H-Atom einer CH₂-Gruppe durch R⁵ oder R⁶ substituiert sein kann, wobei R⁵, R⁶ unabhängig voneinander Alkyl mit 1 bis 15 C-Atomen bedeuten.

3. Ferroelektrische Flüssigkristallmischung gemäß Anspruch 1, dadurch gekennzeichnet, daß sie mindestens einen Ionophor der allgemeinen Formel (I) enthält, wobei
R¹,R²,R³,R⁴ unabhängig voneinander Alkyl mit 1 bis 15 C-Atomen, bei dem eine -CH₂-Gruppe durch -COO- ersetzt sein kann oder Cyclohexyl bedeuten und
X ein Alkylen mit 2 bis 9 C-Atomen ist, bei dem ein oder zwei nicht benachbarte -CH₂-Gruppen durch -O- ersetzt sein können, bei dem zwei benachbarte CH₂-Gruppen durch 1,2-Phenylen ersetzt sein können, und bei dem zwei benachbarte -CH₂-Gruppen durch -CH(CH₃)-CH(CH₃)-ersetzt sein können.

4. Ferroelektrische Flüssigkristallmischung gemäß Anspruch 1, dadurch gekennzeichnet, daß sie einen Ionophor der allgemeinen Formel (I) enthält, wobei -X- für
eine der folgenden Gruppen steht 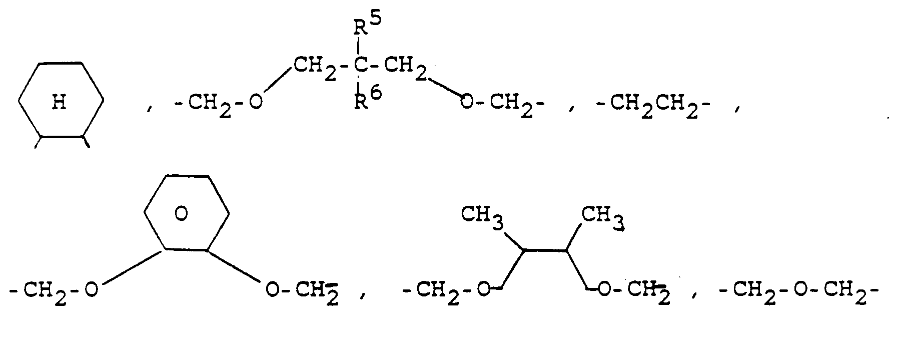 und R¹ bis R⁶ die in Anspruch 1 genannten Bedeutungen tragen.

5. Ferroelektrische Flüssigkristallmischungen nach einem oder mehreren der Ansprüche 1 bis 4, dadurch gekennzeichnet, daß die Mischung 0,01 bis 10 Mol-% der Verbindung der allgemeinen Formel I enthält.

6. Verwendung von ferroelektrischen Flüssigkristallmischungen gemäß Anspruch 1 bis 5 in FLC-Schalt- und Anzeigevorrichtungen.

7. Verwendung von ferroelektrischen Flüssigkristallmischungen gemäß Anspruch 1 bis 5 in SS-FLC-Zellen mit einer Schichtdicke von 1 bis 10 µm.

8. Verwendung von FLC-Mischungen gemäß Anspruch 1 bis 5, dadurch gekennzeichnet, daß die FLC-Mischungen mehrere verschiedene Verbindungen der allgemeinen Formel (I) enthalten.

9. Flüssigkristall- Schalt und -Anzeigevorrichtung enthaltend ein ferroelektrisches flüssigkristallines Medium, Trägerplatten, Elektroden, mindestens eine Orientierungsschicht sowie gegebenenfalls zusätzliche Hilfsschichten, dadurch gekennzeichnet, daß das ferroelektrische flüssigkristalline Medium eine FLC-Mischung darstellt, die mindestens eine Verbindung der allgemeinen Formel (I) gemäß Anspruch 1 enthält.

10. Flüssigkristall- Schalt und -Anzeigevorrichtung gemäß Anspruch 9, dadurch gekennzeichnet, daß die Schalt- und Anzeigevorrichtung eine SSFLC-Zelle mit einer FLC-Schichtdicke von 1 bis 20 µm ist.

## Patentansprüche (Patentansprüche für folgende(n) Vertragsstaat(en): ES)

1. Verwendung von ferroelektrischen Flüssigkristallmischungen bestehend aus mindestens zwei Komponenten, dadurch gekennzeichnet, daß sie als eine Komponente mindestens einen Ionophor der allgemeinen Formel (I) enthält 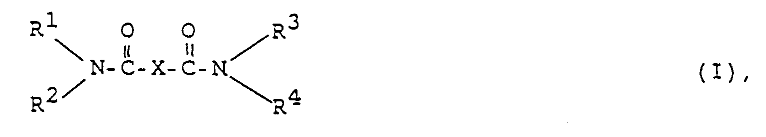 wobei
R¹,R²,R³,R⁴ unabhängig voneinander Alkyl mit 1 bis 15 C-Atomen, bei dem eine -CH₂-Gruppe durch -COO- oder -CO- oder eine nicht direkt an das N-Atom gebundene -CH₂-Gruppe durch -O- ersetzt sein kann, Cyclohexyl, Phenyl oder Benzyl bedeuten und
X ein Alkylen mit 2 bis 9 C-Atomen ist, bei dem ein oder zwei nicht benachbarte -CH₂-Gruppen durch -O- ersetzt sein können, bei dem zwei benachbarte CH₂-Gruppen durch 1,2-Phenylen oder 1,2-Cyclohexylen ersetzt sein können, bei dem zwei benachbarte -CH₂-Gruppen durch -CH(CH₃)-CH(CH₃)- ersetzt sein können und bei dem ein H-Atom einer CH₂-Gruppe durch R⁵ oder R⁶ substituiert sein kann, wobei R⁵ Alkyl mit 1 bis 15 C-Atomen R⁶ Alkyl mit 1 bis 15 C-Atomen oder CH₂-O-CH₂-CO-NR¹R² bedeuten,
in FLC-Schalt- und -Anzeigevorrichtungen.

2. Verwendung nach Anspruch 1, dadurch gekennzeichnet, daß die Flüssigkristallmischung mindestens einen Ionophor der Formel (I) enthält, wobei
R¹,R²,R³,R⁴ unabhängig voneinander Alkyl mit 1 bis 15 C-Atomen, bei dem eine -CH₂-Gruppe durch -COO- oder eine nicht direkt an das N-Atom gebundene -CH₂-Gruppe durch -O- ersetzt sein kann, Cyclohexyl oder Phenyl bedeuten und
X ein Alkylen mit 2 bis 9 C-Atomen ist, bei dem ein oder zwei nicht benachbarte -CH₂-Gruppen durch -O- ersetzt sein können, bei dem zwei benachbarte CH₂-Gruppen durch 1,2-Phenylen oder 1,2-Cyclohexylen ersetzt sein können, bei dem zwei benachbarte -CH₂-Gruppen durch -CH(CH₃)-CH(CH₃)- ersetzt sein können und bei dem ein H-Atom einer CH₂-Gruppe durch R⁵ oder R⁶ substituiert sein kann, wobei R⁵, R⁶ unabhängig voneinander Alkyl mit 1 bis 15 C-Atomen bedeuten,

3. Verwendung nach Anspruch 1, dadurch gekennzeichnet, daß die Flüssigkristallmischung mindestens einen Ionophor der allgemeinen Formel (I) enthält, wobei
R¹,R²,R³,R⁴ unabhängig voneinander Alkyl mit 1 bis 15 C-Atomen, bei dem eine -CH₂-Gruppe durch -COO- ersetzt sein kann oder Cyclohexyl bedeuten und
X ein Alkylen mit 2 bis 9 C-Atomen ist, bei dem ein oder zwei nicht benachbarte -CH₂-Gruppen durch -O- ersetzt sein können, bei dem zwei benachbarte CH₂-Gruppen durch 1,2-Phenylen ersetzt sein können, und bei dem zwei benachbarte -CH₂-Gruppen durch -CH(CH₃)-CH(CH₃)-ersetzt sein können.

4. Verwendung nach Anspruch 1, dadurch gekennzeichnet, daß die Flüssigkristallmischung mindestens einen Ionophor der Formel (I) enthält, in der X für eine der folgenden Gruppen steht 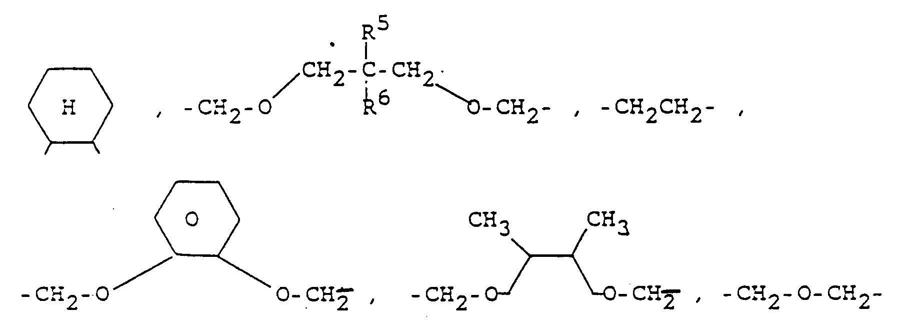 und R¹ bis R⁶ die in Anspruch 1 genannten Bedeutungen tragen.

5. Verwendung nach einem oder mehreren der Ansprüche 1 bis 4, dadurch gekennzeichnet, daß die Flüssigkristallmischung 0,01 bis 10 Mol-% der Verbindung der allgemeinen Formel (I) enthält.

6. Verwendung nach einem oder mehreren der Ansprüche 1 bis 5, dadurch gekennzeichnet, daß die Mischungen in SS-FLC-Zellen mit einer Schichtdicke von 1 bis 10 µm eingesetzt werden.

7. Verwendung nach einem oder mehreren der Ansprüche 1 bis 5, dadurch gekennzeichnet, daß die FLC-Mischungen mehrere verschiedene Verbindungen der allgemeinen Formel (I) enthalten.

## Claims (Claims for the following Contracting State(s): AT, BE, CH, DE, DK, FR, GB, GR, IT, LI, LU, NL, SE)

1. A ferroelectric liquid crystal mixture composed of at least two components, which contains as one component at least one ionophore of the formula (I) 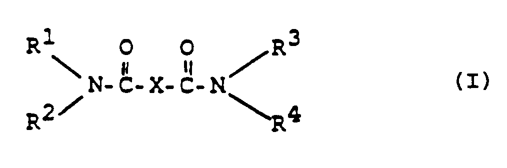 in which
R¹, R², R³, R⁴, independently of one another, are alkyl of 1 to 15 carbon atoms, in which one -CH₂- group can be replaced by -COO- or -CO- or one -CH₂- group not attached directly to the nitrogen atom can be replaced by -O-, or are cyclohexyl, phenyl or benzyl, and
X is an alkylene of 2 to 9 carbon atoms, in which one or two non-adjacent -CH₂- groups can be replaced by -O-, in which two adjacent CH₂ groups can be replaced by 1,2-phenylene or 1,2-cyclohexylene, in which two adjacent -CH₂-groups can be replaced by -CH(CH₃)-CH(CH₃)- and in which a hydrogen atom of a CH₂ group can be substituted by R⁵ or R⁶, in which R⁵ is alkyl of 1 to 15 carbon atoms,
R⁶ is alkyl of 1 to 15 carbon atoms or CH₂-O-CH₂-CO-NR¹R².

2. A ferroelectric liquid crystal mixture as claimed in claim 1, which contains at least one ionophore of the formula (I) in which
R¹, R², R³, R⁴, independently of one another, are alkyl of 1 to 15 carbon atoms, in which one -CH₂- group can be replaced by -COO- or one -CH₂- group not attached directly to the nitrogen atom can be replaced by -O-, or are cyclohexyl or phenyl, and
X is an alkylene of 2 to 9 carbon atoms, in which one or two non-adjacent -CH₂-groups can be replaced by -O-, in which two adjacent CH₂ groups can be replaced by 1,2-phenylene or 1,2-cyclohexylene, in which two adjacent -CH₂-groups can be replaced by -CH(CH₃)-CH(CH₃)- and in which a hydrogen atom of a CH₂ group can be substituted by R⁵ or R⁶, in which R⁵, R⁶, independently of one another, are alkyl of 1 to 15 carbon atoms.

3. A ferroelectric liquid crystal mixture as claimed in claim 1, which contains at least one ionophore of the formula (I) in which
R¹, R², R³, R⁴, independently of one another, are alkyl of 1 to 15 carbon atoms, in which one -CH₂- group can be replaced by -COO-, or are cyclohexyl, and
X is an alkylene of 2 to 9 carbon atom, in which one or two non-adjacent -CH₂-groups can be replaced by -O-, in which two adjacent CH₂ groups can be replaced by 1,2-phenylene, and in which two adjacent -CH₂- groups can be replaced by -CH(CH₃)-CH(CH₃)-.

4. A ferroelectric liquid crystal mixture as claimed in claim 1, which contains an ionophore of the formula (I) in which -X- is one of the following groups 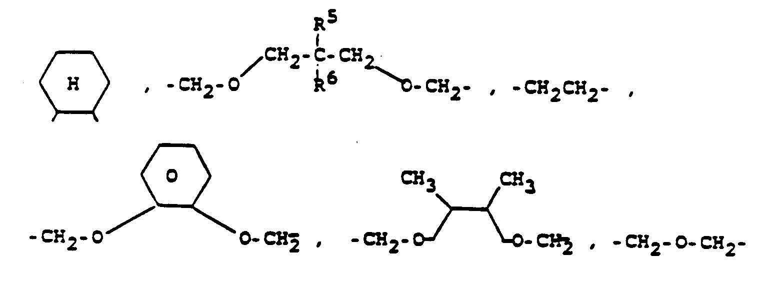 and R¹ to R⁶ have the meanings mentioned in claim 1.

5. A ferroelectric liquid crystal mixture as claimed in one or more of claims 1 to 4, which contains 0.01 to 10 mol% of the compound of the formula I.

6. Use of a ferroelectric liquid crystal mixture as claimed in claim 1 to 5 in FLC switching and display devices.

7. Use of a ferroelectric liquid crystal mixture as claimed in claim 1 to 5 in SSFLC cells having a cell thickness of 1 to 10 µm

8. Use of an FLC mixture as claimed in claim 1 to 5, wherein the FLC mixture contains two or more different compounds of the formula (I).

9. A liquid crystal switching and display device, comprising a ferroelectric liquid-crystalline medium, support plates, electrodes, at least one orientation layer and, if desired, additional auxiliary layers, wherein the ferroelectric liquid-crystalline medium is an FLC mixture which contains at least one compound of the formula (I) as claimed in claim 1.

10. A liquid crystal switching and display device as claimed in claim 9, wherein the switching and display device is an SSFLC cell having an FLC cell thickness of 1 to 20 µm.

## Claims (Claims for the following Contracting State(s): ES)

1. Use of a ferroelectric liquid crystal mixture composed of at least two components, which contains as one component at least one ionophore of the formula (I) 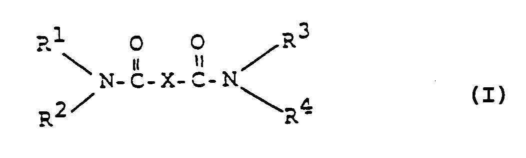 in which
R¹, R², R³, R⁴, independently of one another, are alkyl of 1 to 15 carbon atoms, in which one -CH₂- group can be replaced by -COO- or -CO- or one -CH₂- group not attached directly to the nitrogen atom can be replaced by -O-, or are cyclohexyl, phenyl or benzyl, and
X is an alkylene of 2 to 9 carbon atoms, in which one or two non-adjacent -CH₂- groups can be replaced by -O-, in which two adjacent CH₂ groups can be replaced by 1,2-phenylene or 1,2-cyclohexylene, in which two adjacent -CH₂-groups can be replaced by -CH(CH₃)-CH(CH₃)- and in which a hydrogen atom of a CH₂ group can be substituted by R⁵ or R⁶, in which
R⁵ is alkyl of 1 to 15 carbon atoms,
R⁶ is alkyl of 1 to 15 carbon atoms or CH₂-O-CH₂-CO-NR¹R², in FLC switching and display devices.

2. Use as claimed in claim 1, wherein the liquid crystal mixture contains at least one ionophore of the formula (I) in which
R¹, R², R³, R⁴, independently of one another, are alkyl of 1 to 15 carbon atoms, in which one -CH₂- group can be replaced by -COO- or one -CH₂- group not attached directly to the nitrogen atom can be replaced by -O-, or are cyclohexyl or phenyl, and
X is an alkylene of 2 to 9 carbon atoms, in which one or two non-adjacent -CH₂-groups can be replaced by -O-, in which two adjacent CH₂ groups can be replaced by 1,2-phenylene or 1,2-cyclohexylene, in which two adjacent -CH₂-groups can be replaced by -CH(CH₃)-CH(CH₃)- and in which a hydrogen atom of a CH₂ group can be substituted by R⁵ or R⁶, in which R⁵, R⁶, independently of one another, are alkyl of 1 to 15 carbon atoms.

3. Use as claimed in claim 1, wherein the liquid crystal mixture contains at least one ionophore of the formula (I) in which
R¹, R², R³, R⁴, independently of one another, are alkyl of 1 to 15 carbon atoms, in which one -CH₂- group can be replaced by -COO-, or are cyclohexyl, and
X is an alkylene of 2 to 9 carbon atoms, in which one or two non-adjacent -CH₂-groups can be replaced by -O-, in which two adjacent CH₂ groups can be replaced by 1,2-phenylene, and in which two adjacent -CH₂- groups can be replaced by -CH(CH₃)-CH(CH₃)-.

4. Use as claimed in claim 1, wherein the liquid crystal mixture contains at least one ionophore of the formula (I) in which X is one of the following groups 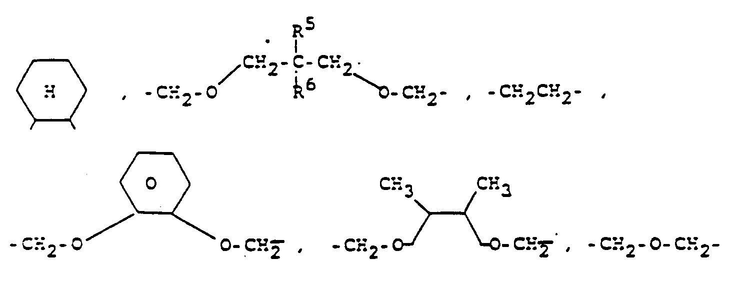 and R¹ to R⁶ have the meanings mentioned in claim 1.

5. Use as claimed in one or more of claims 1 to 4, wherein the liquid crystal mixture contains 0.01 to 10 mol% of the compound of the formula (I).

6. Use as claimed in one or more of claims 1 to 5, wherein the mixtures are used in SSFLC cells having a cell thickness of 1 to 10 µm.

7. Use as claimed in one or more of claims 1 to 5, wherein the FLC mixtures contain two or more different compounds of the formula (I).

## Revendications (Revendications pour l'(les) Etat(s) contractant(s) suivant(s): AT, BE, CH, DE, DK, FR, GB, GR, IT, LI, LU, NL, SE)

1. Mélange de cristaux liquides ferroélectriques formé d'au moins deux composants, mélange caractérisé en ce que l'un des composants est constitué d'un ou de plusieurs ionophores de formule générale (I) 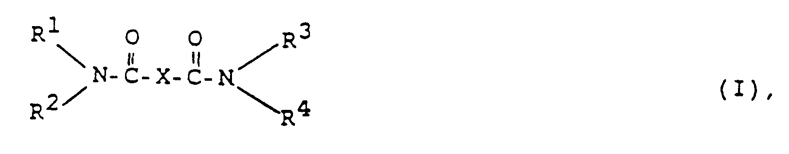 dans laquelle
R¹,R²,R³ et R⁴ représentent indépendamment les uns les autres des alkyles ayant de 1 à 15 atomes de carbone dont un groupe -CH₂- peut être remplacé par -COO- ou -CO- ou un groupe -CH₂- non directement lié à l'atome d'azote peut être remplacé par -O-, ou bien des cyclohexyles, phényles ou benzyles
X représente un alkylène ayant de 2 à 9 atomes de carbone dont un ou deux groupes -CH₂- non voisins peuvent être remplacés par -O-, deux groupes -CH₂- voisins par un radical 1,2-phénylène ou 1,2-cyclohexylène et deux groupes -CH₂- voisins par le radical -CH(CH₃)-CH(CH₃)-, et dont un atome d'hydrogène d'un groupe -CH₂- peut être remplacé par un radical R⁵ ou R⁶, R⁵ étant un alkyle avec de 1 à 15 atomes de carbone et R⁶ un alkyle avec également de 1 à 15 atomes de carbone ou un radical -CH₂-O-CH₂-CO-NR¹R²-

2. Mélange de cristaux liquides ferroélectriques selon la revendication 1, caractérisé en ce qu'il comprend un ou plusieurs ionophores de formule (I) dans lesquels
R¹, R², R³, et R⁴ sont indépendamment les uns des autres des alkyles ayant de 1 à 15 atomes de carbone dont un groupe -CH₂- peut être remplacé par -COO- ou un groupe -CH₂- non directement liés à l'atome d'azote par -O-, ou bien des cyclohexyles ou des phenyles et
X est un alkylène ayant de 2 à 9 atomes de carbone dont un ou deux groupes -CH₂- non voisins peuvent être remplacés par -O-, deux groupes -CH₂- voisins par un radical 1,2-phénylène, ou 1,2-cyclohexylène et deux groupes -CH₂- voisins par le radical - CH(CH₃)-CH(CH₃)-, et dont un atome d'hydrogène d'un groupe -CH₂- peut être remplacé par un radical R⁵ ou R⁶, lesquels sont indépendamment l'un de l'autre des alkyles avec de 1 à 15 atomes de carbone.

3. Mélange de cristaux liquides ferroélectriques selon le revendication 1, caractérisé en ce qu'il comprend un ou plusieurs ionophores de formule (I) dans lesquels
R¹, R², R³ et R⁴ sont des alkyles avec de 1 à 15 atomes de carbone dont un groupe -CH₂- peut être remplacé par le groupe -COO-, ou bien des cyclohexyles,
X est un alkylène avec de 2 à 9 atomes de carbone dont un ou deux groupes -CH₂- non voisins peuvent être remplacés par -O-, deux groupes -CH₂- voisins par le radical 1,2-phenylène et deux groupes -CH₂- voisins par le radical -CH(CH₃)-CH(CH₃)-.

4. Mélange de cristaux liquide ferroélectriques selon la revendication 1, caractérisé en ce qu'il comprend un ionophore de formule (I) dont -X- est l'un des groupes suivants 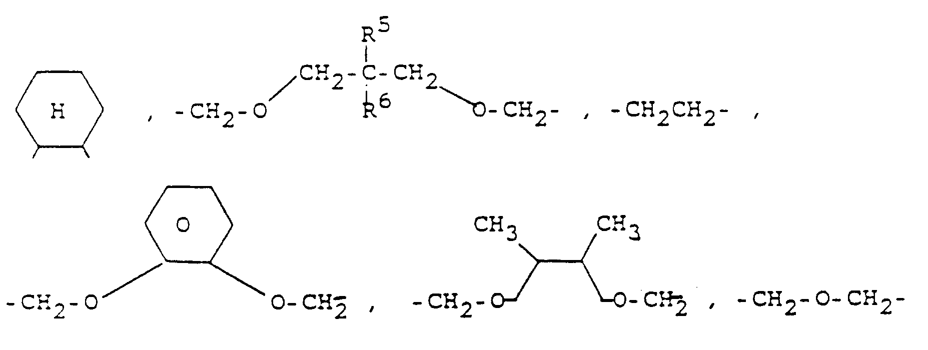 les symboles R¹ à R⁶ ayant les significations indiquées à la revendication 1.

5. Mélange selon une ou plusieurs de revendications 1 à 4, caractérisé en ce qu'il contient de 0,01 à 10 mol-% d'un composé de formule (I).

6. L'emploi de mélanges de cristaux liquides ferroélectriques selon les revendications de 1 à 5 dans des dispositifs de commutation et affichage ou visualisation par cristaux liquides ferroélectriques.

7. Emploi de mélanges selon les revendications de 1 à 5 dans des cellules de cristaux liquides SS à une épaisseur de couche de 1 à 10 µm.

8. Emploi de mélanges selon les revendications de 1 à 5, caractérisé en ce que ces mélanges contiennent plusieurs composés différents de formule (I).

9. Dispositif de commutation ou affichage et visualisation à cristaux liquides comprenant un milieu de cristaux liquides ferroélectriques avec des plaques servant de supports, des électrodes, une ou plusieurs couches d'orientation et le cas d'échéant également des couches auxiliaires, dispositif caractérisé en ce que le milieu de cristaux liquides ferroélectriques est un mélange de cristaux liquides ferroélectriques contenant un ou plusieurs composés de formule (I) selon la revendication 1.

10. Dispositif selon la revendication 9, caractérisé en ce qu'il s'agit d'une cellule de cristaux liquides ferroélectriques SS d'une épaisseur de couche des cristaux de 1 à 20 µm.

## Revendications (Revendications pour l'(les) Etat(s) contractant(s) suivant(s): ES)

1. L'emploi dans des dispositifs de commutation et affichage ou visualisation à cristaux liquides ferroélectriques de mélange de cristaux liquides ferroélectriques formés d'au moins deux composants et caractérisés en ce que l'un des composants est constitué d'un ou de plusieurs ionophores de formule générale (I) dans laquelle
R¹,R²,R³ et R⁴ représentent indépendamment les uns les autres des alkyles ayant de 1 à 15 atomes de carbone dont un groupe -CH₂- peut être remplacé par -COO- ou -CO- ou un groupe -CH₂- non directement lié à l'atome d'azote peut être remplacé par -O-, ou bien des cyclohexyles, phényles ou benzyles
X représente un alkylène ayant de 2 à 9 atomes de carbone dont un ou deux groupes -CH₂- non voisins peuvent être remplacés par -O-, deux groupes -CH₂- voisins par un radical 1,2-phénylène ou 1,2-cyclohexylène et deux groupes -CH₂- voisins par le radical -CH(CH₃)-CH(CH₃)-, et dont un atome d'hydrogène d'un groupe -CH₂- peut être remplacé par un radical R⁵ ou R⁶, R⁵ étant un alkyle avec de 1 à 15 atomes de carbone et R⁶ un alkyle avec également de 1 à 15 atomes de carbone ou un radical -CH₂-O-CH₂-CO-NR¹R²-

2. Emploi selon la revendication 1, caractérisé en ce que le mélange de cristaux liquides contient un ou plusieurs ionophores de formule (I) dans lesquels
R¹, R², R³, et R⁴ sont indépendamment les uns des autres des alkyles ayant de 1 à 15 atomes de carbone dont un groupe -CH₂- peut être remplacé par -COO- ou un groupe -CH₂- non directement liés à l'atome d'azote par -O-, ou bien des cyclohexyles ou des phenyles et
X est un alkylène ayant de 2 à 9 atomes de carbone dont un ou deux groupes -CH₂- non voisins peuvent être remplacés par -O-, deux groupes -CH₂- voisins par un radical 1,2-phénylène, ou 1,2-cyclohexylène et deux groupes -CH₂- voisins par le radical -CH(CH₃)-CH(CH₃)-, et dont un atome d'hydrogène d'un groupe -CH₂- peut être remplacé par un radical R⁵ ou R⁶, lesquels sont indépendamment l'un de l'autre des alkyles avec de 1 à 15 atomes de carbone.

3. Emploi selon la revendication 1, caractérisé en ce que le mélange de cristaux liquides contient un ou plusieurs ionophores de formule (I) dans lesquels
R¹, R², R³ et R⁴ sont des alkyles avec de 1 à 15 atomes de carbone dont un groupe -CH₂- peut être remplacé par le groupe -COO-, ou bien des cyclohexyles,
X est un alkylène avec de 2 à 9 atomes de carbone dont un ou deux groupes -CH₂- non voisins peuvent être remplacés par -O-, deux groupes -CH₂- voisins par le radical 1,2-phenylène et deux groupes -CH₂- voisins par le radical -CH(CH₃)-CH(CH₃)-.

4. Emploi selon la revendication 1, caractérisé en ce que le mélange de cristaux liquides contient un ou plusieurs ionophores de formule (I) dans lesquels
X est l'un des groupe suivant : 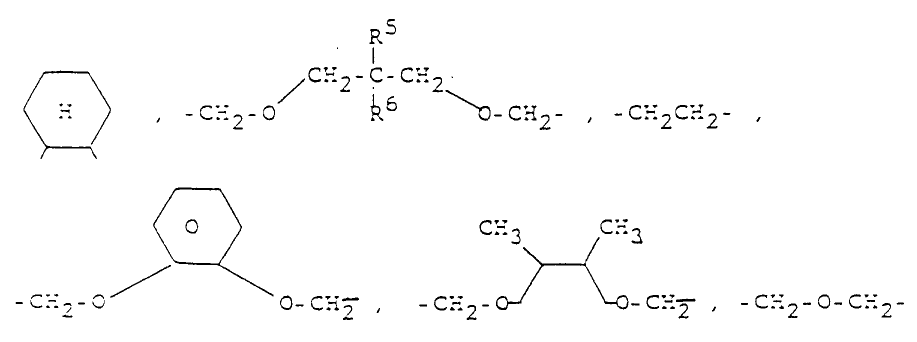 les symboles R¹ et R⁶ ayant les significations indiquées à la revendication 1.

5. Emploi selon une ou plusieurs des revendications de 1 à 4, caractérisé en ce que le mélange de cristaux liquides contient de 0,01 à 10 mol-% d'un composé de formule (I).

6. Emploi selon une ou plusieurs des revendications de 1 à 5, caractérisé en ce que les mélanges sont utilisés dans des cellules de cristaux liquides ferroélectriques SS à une épaisseur de couches de 1 à 10 µm.

7. Emploi selon une ou plusieurs des revendications de 1 à 5, caractérisé en ce que les mélanges de cristaux liquides ferroélectriques contiennent plusieurs composés différents de formule (I).
